# EUROPEAN PATENT SPECIFICATION

(11) **EP 1 222 649 B1**
(45) Date of publication and mention of the grant of the patent: **14.04.2004**
(21) Application number: 00953750.7
(22) Date of filing: 31.07.2000
(51) Int. Cl.: G09B 5/14

(54) **METHODS AND APPARATUS FOR COMPUTER TRAINING RELATING TO DEVICES USING A RESOURCE CONTROL MODULE**
VERFAHREN UND VORRICHTUNG ZUM COMPUTERUNTERSTÜTZTEN TRAINING IN DER VERWENDUNG VON GERÄTEN MIT BETRIEBSMITTELSTEUERUNG
PROCEDES ET APPAREIL D'APPRENTISSAGE INFORMATIQUE, RELATIFS A DES DISPOSITIFS UTILISANT UN MODULE DE COMMANDE DE RESSOURCES

(30) Priority: 30.07.1999 US 365243; 31.03.2000 US 540401
(43) Date of publication of application: 17.07.2002
(73) Proprietor: Element K Online LLC, Rochester, New York 14623 (US)
(72) Inventor: BONEY, James, L., Pasadena, MD 21122 (US); SLATTERY, Terrance, C., Annapolis, MD 21401 (US); COVILLE, Shawn, G., 2135TA Hoofddorp (NL)
(74) Representative: Jones, Stephen Anthony
(86) International application number: PCT/US2000/020738
(87) International publication number: WO 2001/009866

(56) References cited:
- WO-A-99/33041
- US-A- 5 727 950
- LEFKOWITZ L S ET AL: "A KNOWLEDGE-BASED INTELLIGENT TUTORING SYSTEM FOR TELEPHONY OPERATIONS SUPPORT SYSTEMS" PROCEEDINGS OF THE INTERNATIONAL CONFERENCE ON COMMUNICATIONS (ICC),US,NEW YORK, IEEE, vol. -, 23 May 1993 (1993-05-23), pages 1880-1884, XP000448446 ISBN: 0-7803-0950-2

## Description

### BACKGROUND OF THE INVENTION

The present invention relates to computer based training, and more particularly, to methods and apparatus for computer based training providing hands-on training related to devices.

Traditionally, students have been taught about devices in a classroom setting where the students were lectured about the devices and presented with written tests. Although students have been taught in a lab setting, this requires students to travel to a specific location to perform the lab. Thus, making it difficult and inconvenient for students without easy access to a lab.

Thus, it has been difficult for students to gain hands-on experience regarding devices in a classroom setting, in their office place, or at home. Further, the need for more hands on time with devices is becoming critical for professionals that are working towards certifications such as the CISCO Certified Intemetworking Expert (CCIE) certification, which is the highest certification level bestowed by CISCO.

WO 99/33041 discloses a remote computer-assisted compliance monitoring system comprising a server computer system and first and second client computer systems. A student user of the first client computer system uses a teaching process to promote development of cognitive skills of the student, and a supervisor uses a second client computer to remotely monitor the progress of the student.

Accordingly, there is a need for a distance based solution that provides students with hands-on training with devices.

### SUMMARY OF THE INVENTION

Accordingly, the present invention is directed to methods and apparatus that substantially obviates the above and other disadvantages of the prior art.

According to a first aspect of the invention, there is provided a method for training users to operate a set of devices, wherein at least one client computer is connected to a device controller via a network and wherein a particular user uses the client computer to communicate with the device controller via the network to perform a training exercise using the set of one or more devices, the method comprising the steps of:
receiving control information at a proxy in the device controller reflecting at least one instruction from the client computer regarding a task to be performed as part of the training exercise;
performing an operation associated with at least one of the devices of the set of devices; and
providing a result of the operation to the client computer.

According to a further aspect of the invention, there is provided a system for training users to operate a set of one or more devices, comprising:
a device controller connected to at least one client computer via a network, wherein the device controller includes a proxy that receives control information from the client computer reflecting at least one task to be performed as part of a training exercise and transfers the control information to any device as part of the training exercise; and
a set of devices that receives the control information transferred from the proxy in the device controller, performs an operation associated with the control information, and provides a result of the operation to the client computer via the device controller.

According to a further aspect of the invention, there is provided a method for training users to operate a set of devices, wherein at least one client computer is connected to a device controller via a network and wherein a particular user uses the client computer to communicate with the device controller via the network to perform a training exercise using the set of devices, the method comprising the steps of:
a server controller transferring overhead information using a generic set of commands to the device controller in order to perform overhead functions relating to the set of devices;
the device controller using the overhead information to exercise control over at least one of the devices in the set of devices for the purposes of performing overhead functions relating to the device;
receiving control information at the device controller reflecting at least one instruction from the client computer regarding a task to be performed as part of the training exercise;
performing an operation associated with at least one of the devices of the set of devices; and
providing a result of the operation to the client computer.

According to a further aspect of the invention, there is provided a system for training users to operate devices, comprising:
a set of devices;
a server/controller including a processor that transfers overhead information for overhead functions relating to the set of devices using a generic set of commands;
a device controller connected to at least one client computer via a network and connected to the server/controller, wherein the device controller includes a processor configured to receive the overhead information from the server/controller, exercise control over the set of devices using the overhead information, receive from the client computer control information reflecting at least one task associated with a training exercise, and transfer the control information to the set devices in order to perform an operation associated with at least one device of the set.

The following detailed description should not restrict the scope of the claimed invention. It provides examples and explanations to enable others to practice the invention. The accompanying drawings, which form part of the description for carrying out the best mode of the invention, show several embodiments of the invention, and together with the description, explain the principles of the invention.

### BRIEF DESCRIPTION OF THE DRAWINGS

In the Figures:
Figure 1 illustrates a block diagram of a computer-based system for training of devices in accordance with methods and systems consistent with the invention;
Figure 2 illustrates a block diagram showing a distributed set of pod controllers, in accordance with methods and systems consistent with the invention;
Figure 3 provides a detailed diagram of a pod controller, in accordance with methods and systems consistent with the invention;
Figure 4 illustrates a graphical interface, in accordance with methods and systems consistent with the invention;
Figure 5 provides a flow diagram for a computer based training system, in accordance with methods and systems consistent with the invention;
Figure 6 illustrates an example page that may be displayed to a user to log in or to request account information, in accordance with methods and systems consistent with the invention;
Figure 7 illustrates a page that may be used for setting up a user account, in accordance with methods and systems consistent with the invention;
Figure 8 illustrates Relay Control Boxes, in accordance with methods and systems consistent with the invention.
Figure 9 illustrates a block diagram of a pod controller including a wiretap, in accordance with methods and systems consistent with the invention;
Figure 10 provides an illustration of a Virtual Classroom, in accordance with methods and systems consistent with the invention;
Figure 11 provides a flow diagram for the virtual classroom, in accordance with methods and systems consistent with the invention;
Figure 12 illustrates a logical diagram of a skills learning module, in accordance with methods and systems consistent with the invention;
Figure 13 provides a logical description of information that may be stored by the assignment and story sub-module, in accordance with methods and systems consistent with the invention;
Figure 14 illustrates an example of an assignment and story sub-module, in accordance with methods and systems consistent with the invention;
Figure 15 illustrates an example of a page that provides a user with a suggested approach, in accordance with methods and systems consistent with the invention;
Figure 16 illustrates a template for a page that provides a user with a sample solution, in accordance with methods and systems consistent with the invention;
Figure 17 illustrates an example of an html page that provides a sample solution, in accordance with methods and systems consistent with the invention;
Figure 18 illustrates an example of a page for the check results module, in accordance with methods and systems consistent with the invention;
Figure 19 illustrates an example of a page for the check results module, in accordance with methods and systems consistent with the invention.
Figure 20 illustrates an example of a page that includes archived information for a lab, in accordance with methods and systems consistent with the invention.
Figure 21 provides an illustration of an assessment engine that uses a wiretap to check the configuration of the devices, in accordance with methods and systems consistent with the invention;
Figure 22 illustrates an embodiment in which the server and controller contains an assessment engine, in accordance with methods and systems consistent with the invention.
Figure 23 illustrates a block diagram of a resource control module, in accordance with methods and systems consistent with the invention; and
Figure 24 illustrates a logical block diagram of the proxy module of a resource control module, in accordance with methods and systems consistent with the invention.

### DETAILED DESCRIPTION OF THE INVENTION

Reference will now be made in detail to embodiments of the invention, examples of which are illustrated in the accompanying drawings. Wherever possible, the same reference numbers will be used throughout the drawings to refer to the same or like parts.

### Engine

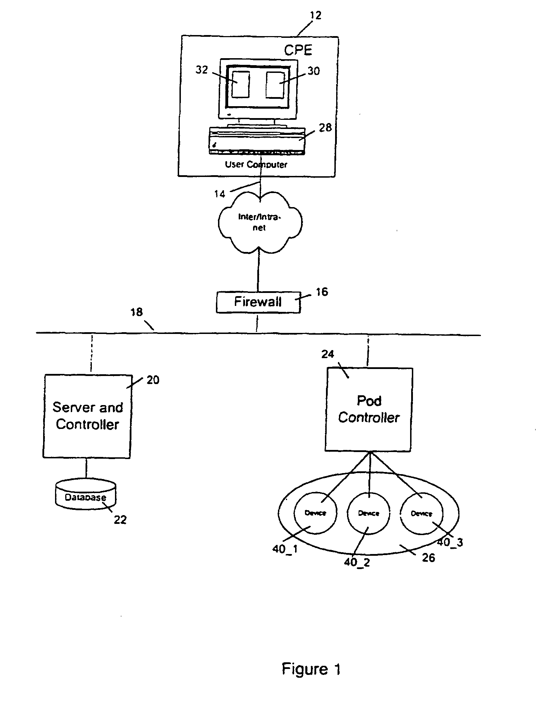

Figure 1 illustrates a simple block diagram of a computer-based system for training relating to devices. As shown, the system preferably includes customer premise equipment 12, a communications link 14, a firewall 16, a communications link 18, a server and controller 20, a database 22, a pod controller 24, and a pod 26. The Customer Premise Equipment (CPE) 12 preferably includes a computer 28 provided with a browser program 30 and a network application program 32. The browser 30 is preferably a browser for Intemet/Intranet communications, such as a Netscape Navigator™ browser or a Microsoft Internet Explorer™ browser. The network application program 32 may be a program such as TELNET. The communications link 14 preferably traverses the Internet or an Intra-net. The pod controller 24 may control one or more pods 26 each of which may contain one or more user devices 40_1 to 40_3. In one embodiment, the user devices 40_1 to 40_3 are network equipment, such as CISCO type switches or routers. In other embodiments, these user devices may be Programmable Logic Controllers (PLCs), Chemistry Equipment, or any other type of device. Further, a pod controller 24 may also control one or more infrastructure devices (not shown). These infrastructure devices provide an authentic environment for which a real world scenario may be written.

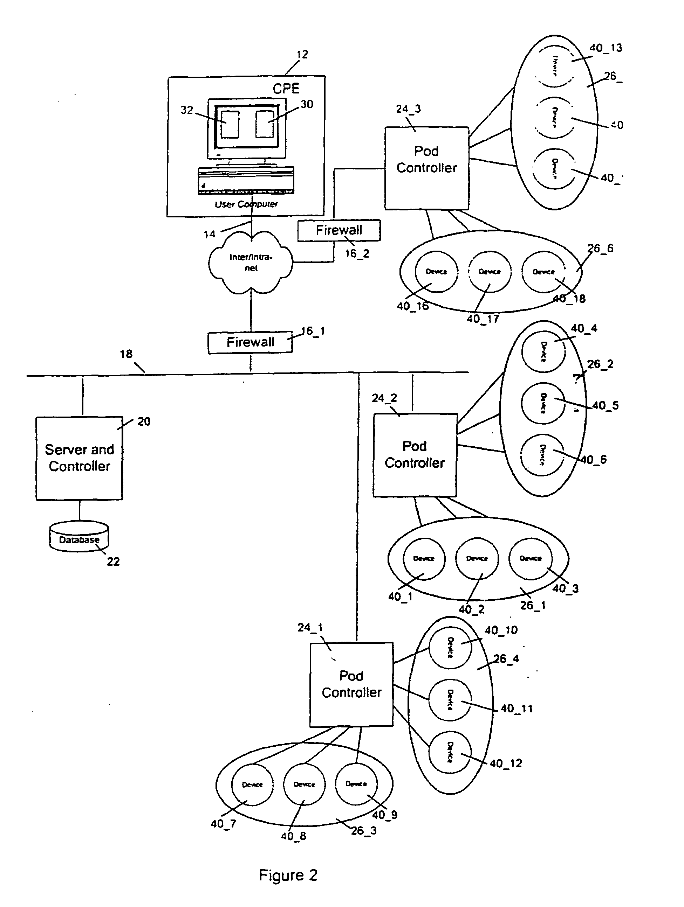

Figure 2, illustrates a simple block diagram of an embodiment with multiple pod controllers 24_1 to 24_3. In this embodiment, pod controllers 24_1 and 24_2 are behind firewall 16_1, and pod controller 24_3 is behind firewall 16_2.

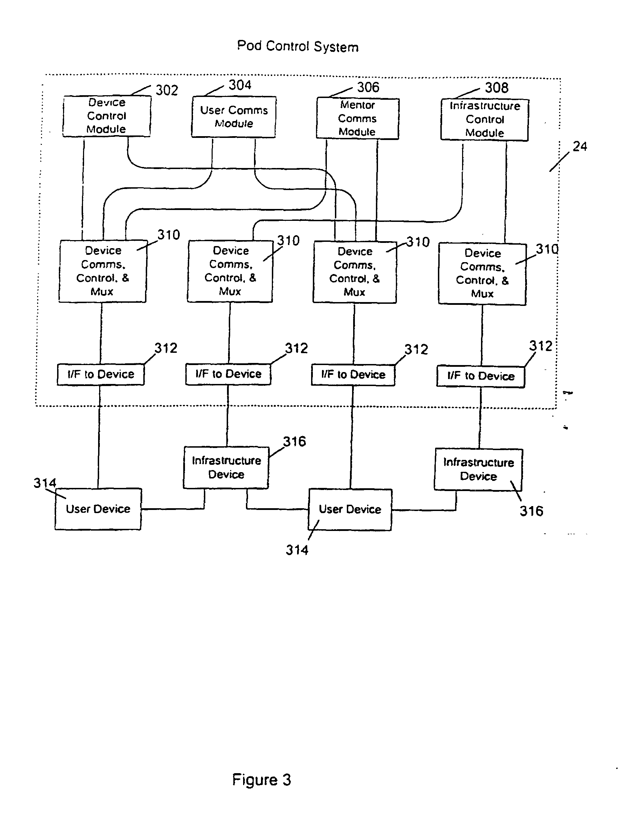

Figure 3 provides a more detailed diagram of the pod controller 24, consistent with an embodiment of the invention. The pod controller 24 may include a device control module 302, a user communications module 304, a mentor communications module 306, an infrastructure control module 308, a device communications, control, and multiplexor module 310, and an interface to device module 312. The pod controller 24 may be connected to user devices 314, and infrastructure devices 316.

The device control module 302 is used to control user accessible devices. It incorporates the control software that enables the pod control system to load starting configurations into the user devices, reset the user devices, and save final configurations. The control within this module preferably is high level and generic across all devices, increasing the modularity and maintainability of the overall system.

The user communications module 304 operates such that when a user connects to a user device, the connection is made though the user communications module. This module receives the connection from the network and validates the user's authorization to access specific devices. This module further translates information received by a user in one protocol into a protocol for feeding into the user device.

The mentor communications module 306 permits a mentor to monitor and participate in controlling the user devices during a learning exercise. The mentor communications module 306 authenticates and authorizes the mentor to connect to specific devices through a computer. A mentor may be a program, such as an Artificial Intelligence program, a person, or any type of hardware or software capable of aiding a user in learning about the user device and its operation.

The infrastructure control module 308 allows additional devices to be interconnected to the user devices in order to replicate real-world scenarios. These devices are part of the infrastructure and require separate control by the pod controller. As such, this module provides the control of the infrastructure devices that are needed to create a real-world scenario for the user. The infrastructure devices 316 are discussed in greater detail below. Further, this module, in conjunction with device, communications, control and multiplexer modules 310, permits devices to be moved between pods connected to the pod controller 24. This will be discussed in further detail below.

A device communications, control, and multiplexor module 310 provides low-level communications and control for each device. In addition, this module provides a mechanism for multiple modules to simultaneously communicate with a single device. Further, as discussed above, this module permits devices to be moved between pods connected to the pod controller 24. For example, Figure 2 illustrates user device 40_4 as part of pod 26_2. If a user wishes to perform an assignment that needs four user devices, the device communications, control, and multiplexor module 310 for user device 40_4 may be reconfigured to move user device 40_4 into pod 26_1. Further, the infrastructure control module 308 may also be reconfigured so that the infrastructure devices necessary for supporting this move are also reconfigured. Thus, pod 26_1 would now include four user devices so that a user wishing to perform the assignment can use pod 26_1 and pod controller 24_1.

The interface to device module 312 is generally implemented in a combination of hardware and software, and provides the pod controller 24 with the capability to communicate directly with the device. For example, if the device 314 uses an RS-232 or similar interface, this module may include software and hardware for implementing an RS-232 connection to the device. Other connection types are possible, such as Ethernet, and the connection type will be dependent on the specifics of the device, Further, this module is capable of receiving information from a user in an application layer protocol, such as TELNET, and translating it so that the information can be communicated directly to a user device.

Each of the modules may be implemented by software running on a processor or computer, As will be obvious to one skilled in the art, all of these modules may be implemented on a single processor, or multiple processors may be used, A variety of computer programming languages may be used to implement the software programs.

The infrastructure devices 316 permit user devices 314 to be interconnected into realistic configurations. The infrastructure devices are not directly accessible by the user. However, the system may implement functions that affect the configuration of these devices depending upon the user's actions. For example, a Frame Relay switch may be used to implement a wide area network connection between user devices. Such a switch may need to be configured and controlled for specific exercises, but because multiple users may need to share it. the switch will not be directly available to the user.

The server and controller 20 may be a computer including memory, a processor, a communications port, a display screen, keyboard, and a mouse. Further, the server and controller 20, for example, may be a web server, such as an Apache or an AOL Server, that uses the Common Gateway Interface (CGI) to allow programs to be executed within the server and controller 20. These programs may provide services to a user via the web such as static web pages, a scheduling mechanism to allow a user to schedule the execution of a specific lab or course at a given time, a lab or course catalog displayed via a web page showing all labs or courses which can be executed, an electronic commerce engine through which users may purchase labs or courses online, and/or a web page which provides a graphical interface for accessing the user devices in specific labs and initiating device control software.

The server and controller 20 may directly provide static web pages or they may be dynamically created from templates and other data contained within a system database. A scheduling component may interface to a database of reservations to determine the availability of devices for a lab. Further, the scheduling component may have the capability to add, delete, or change a user's schedule. A course catalog may include a nearly static page generated from a database of existing labs or courses. This page may be displayed to a user as an html web page. Further, the server and controller 20 may connect to one or more systems, such as electronic commerce systems, training/student management systems, personnel records systems, etc. This connection may be over an Internet, or such systems may reside within the server and controller 20. An electronic commerce system is a system for conducting commerce such as on-line ordering and accepting credit payments over an Internet.

The server and controller 20 may send either static or dynamic web pages to the user's CPE 12 so that they may be displayed to the user through their browser. The content of the user interface page may contain buttons and hot links for the user to invoke the device-specific operations necessary to control the user devices for the purposes of accomplishing a lab or course.

The user computer 28 may be a standard user computer such as an IBM compatible Personal Computer (PC) or Macintosh. Further, the user computer may include a memory, a processor, a keyboard, a mouse, and a port for receiving and transmitting information. The keyboard and mouse may be used by a user to enter information into the computer. The memory may be used for storing programs, such as the browser and network applications programs. The processor may be used for executing these programs. The display screen may be used for displaying information to the user such as html pages, and screens for the browser and network applications programs. The communications port may be used for sending and receiving information over a communications link.

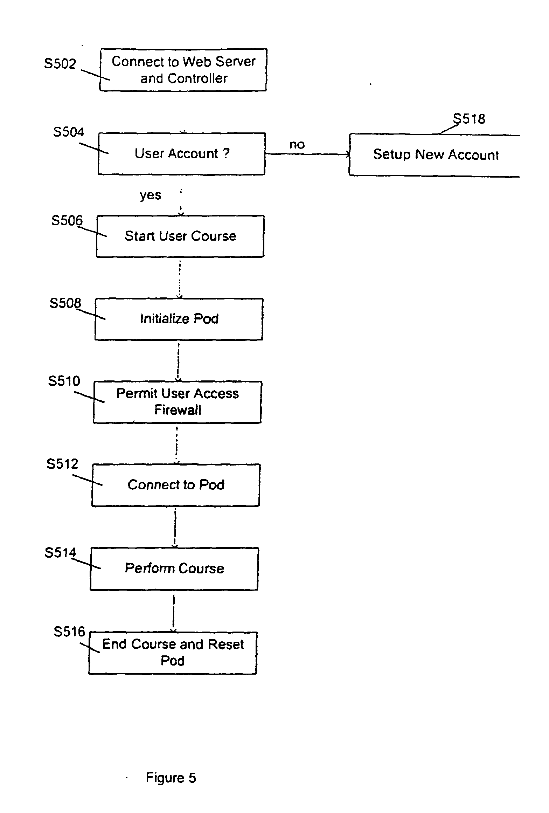

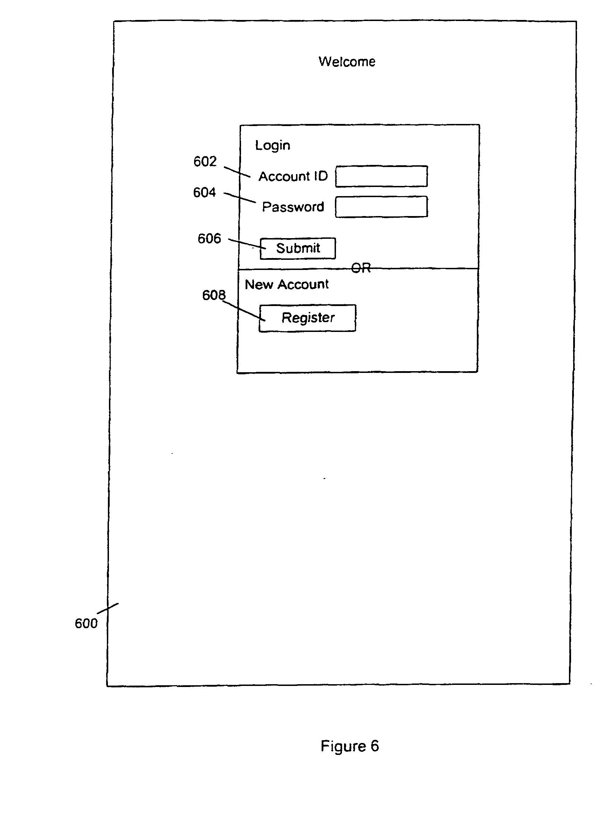

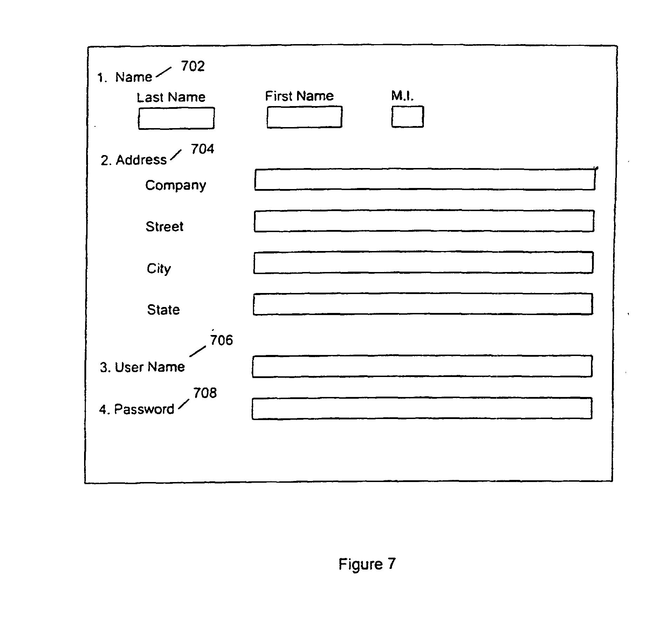

Figure 5 provides a flow diagram for the computer based training system of Figure 1. A user initializes the system by instructing the browser 30 on his/her computer 28 to connect to the server and controller 20 (S502). The firewall 16 is preferably set up to allow the browser 30 and server and controller 20 to freely communicate. The server and controller 20 preferably displays a page to the user requesting an account identification and password and then uses this information to determine if the user has an account (S504). Figure 6 illustrates an example html page 600 that may be displayed to a user to request a user's account identification 602 and password 604. The user can then click on the submit button 606 to submit the information once it has been entered. The user account may contain, among other things, a course for the user and course specific information. If the user has an account, the course is selected and started (S506). If the user does not have an account, he/she is directed to a page for setting up a user account (S518). For example, as illustrated in Figure 6, a user without an account identification is directed to click on a Register button 608. Figure 7 illustrates an html page that may be used for setting up a user account. This page may request, for example, his/her name 702, address 704, a user name 706, and a password 708.

After the course is selected, the server and controller 20 sends an instruction to the pod controller to initialize a pod 26 associated with the selected course (S508). Further, the server and controller 20 sends an instruction to the firewall 16 to permit the user's CPE 12 to access the pod controller 24 (S510). The user then connects to the pod controller 24 using a network application program 32, such as Telnet (S512). Through this mechanism, the user can exercise control over the user devices and perform the assigned training exercise.

A graphical interface may be presented to the user that includes buttons and/or hot links regarding the various user devices. These buttons and/or hotlinks may be used by the user to perform various functions regarding the user devices. The graphical interface may include a button for resetting a user device to its initial starting configuration, a button for saving an existing configuration, a button for loading a new configuration, or a button for forcing the user device into a diagnostic control mode. The user may perform these functions by clicking on a specifically labeled button on the graphical interface. The specific buttons or hotlinks and their respective functions will depend on the specifics of the user devices that make up the lab or course. For example, a chemistry lab may use buttons for controlling a mechanical shuttle which moves a beaker to different locations within an experiment, the addition of a chemical to the beaker, controlling a heating element, or controlling the agitation of the solution within the beaker.

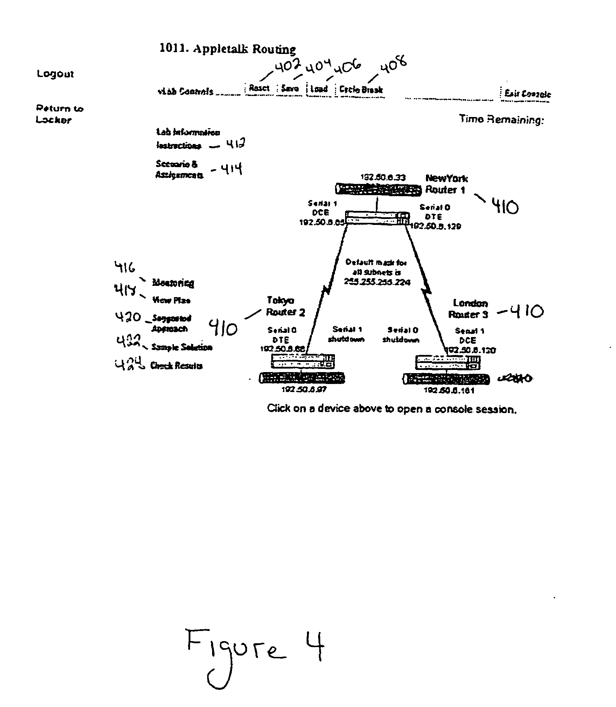

Figure 4 provides an example of a graphical interface a user may see when interacting with a lab including three Cisco routers. The available functions in this example are: reset 402, save configuration 404, load configuration 406, and cycle-break 408. The user may click on the icon 410 of a user device to open a communications connection to the user device when completing the objectives of the lab or course. Further, in this example, the user may click on links for the instructions 412, scenario and assignment 414, mentoring 416, view plan 418, suggested approach 420, sample solution 422, and check results 424. By clicking on one of these links, the user will be taken to an associated web page. These links will be discussed in greater detail later.

After completion of the course, the user's CPE 12 is disconnected from the user devices 40_1 to 40_3 by the pod controller 24, and the user devices are reset to their original settings (S516). For routers, these user devices can be reset by sending a specific sequence to the router that permits the system to gain access to the router even if the user alters the passwords for the router. This may be accomplished by turning off the router, and then turning it back on. During the boot up, control characters can be sent to the router to cause it to enter ROM mode. Once the router is in ROM mode, the user device can be reset so that another user can use the user devices regardless of what the previous user did to the user device.

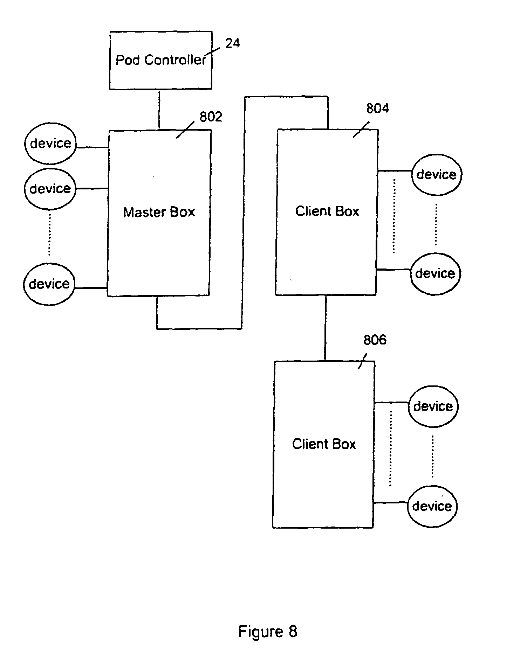

If the user device is a CISCO-type switch, a specific button needs to be pushed during power up in order to enter ROM mode. This switch may be replaced by a relay to close the switch. Thus, the pod controller could reset this user device by closing the relay, or by manually operating the switch. As an example, Figure 8 illustrates three Relay Control Boxes 802, 804, and 806 for resetting devices in which a physical switch needs to be pressed at a particular point in time. Each Relay Control Box may include eight internal relays for controlling eight independent devices. Each relay replaces the physical switch in the device. As illustrated, a master Relay Control Box 802 is connected directly to the Pod Controller 24, and each client Relay Control Box 804 and 806 is serially connected to the master Relay Control Box 802. When a device is to be reset, the pod controller 24 sends an address for the device to the Relay Control Boxes 802, 804, and 806. The Relay Control Boxes 802, 804, and 806 then use this address to close a relay associated with this address that in effect closes the switch for the device. Thus, the Relay Control Boxes and Pod Controller can individually open and close the switches for the particular devices. This example is provided as merely one possible implementation, and as will be obvious to one of skill in the art numerous other implementations are possible. Further, the specifics of how to reset a device will depend on the particulars of the specific device.

In one embodiment, user devices 40_1 to 40_3 are CISCO-type routers and are connected to the pod controller through a COM port. In this embodiment, the pod controller 24 converts the user information from the application layer format it is received in (for example, TELNET) to a format that can be sent to the router through the router's COM port. This is preferably accomplished by the user communications module 304 of the pod controller 24.

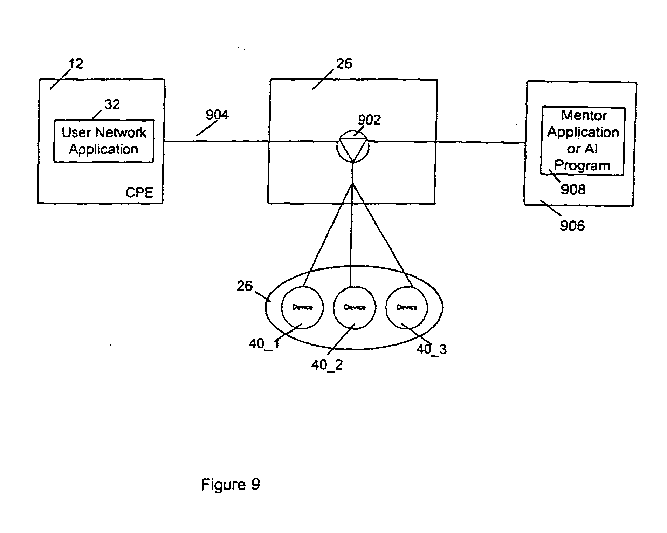

Figure 9 illustrates a block diagram of a pod controller 24 including a wiretap 902 , according to an embodiment. As shown, the pod controller of this embodiment is connected to a user's network application program 32, such as TELNET, over a network connection 904 that preferably includes, referring back to Figure I, a communications link 14 from the CPE 12 to the firewall 16 and a connection from the firewall 16 to the pod controller 24 over communications link 18. Also connected to the wiretap 902 is a mentor's equipment 906 operating a network application 908, such as Telnet. Through this mechanism, a mentor can monitor the instructions the user is sending to the user devices in the pod. As such, the mentor can "watch" what the user is doing, so that the mentor can ensure that the user is properly controlling the user device. Various software and hardware can be used to implement the wiretap. For example, KIBITZ, a program available with the freeware package EXPECT, allows two users to collaborate over a network while interacting with a single program. Thus, by using one KIBITZ for each user device, everything the user types can be seen by the mentor, and visa versa. Other programs with similar functionality may also be used to achieve this type of operation. The wiretap 902 may be implemented in the device communications, control, and multiplexor module 310 of the pod controller 24.

Additionally, this wiretap may permit the mentor to take control of the user devices in the pod so that the user can "watch" the instructions the monitor is sending to the user devices. Thus, the mentor can show the user how to correctly operate the user devices to perform a task. In another embodiment, the wiretap may be connected to an Artificial Intelligence program that oversees the user's operation of the user devices.

### Virtual Classroom

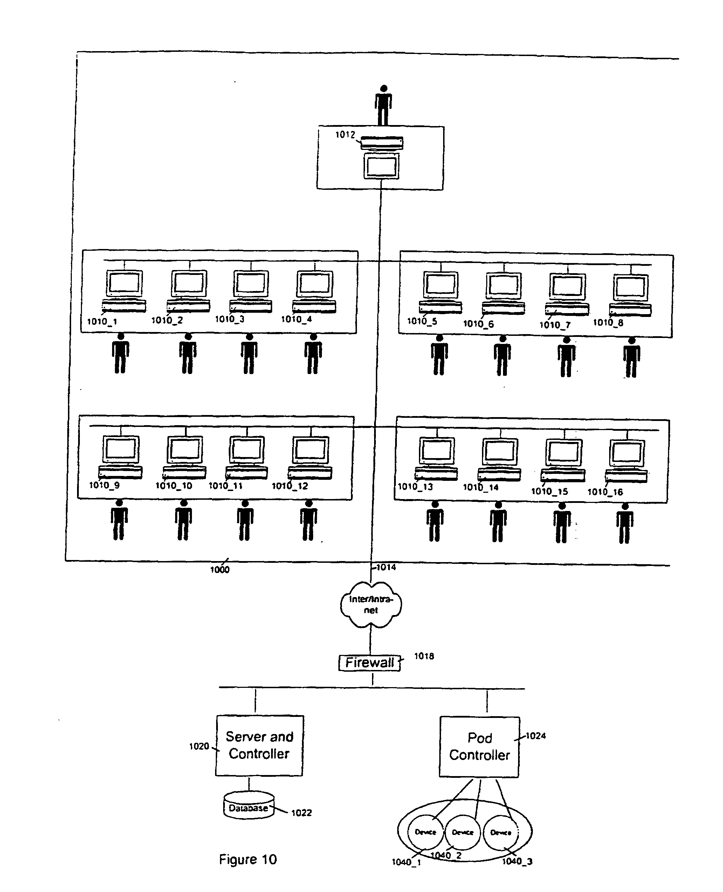

Figure 10 provides an illustration of a Virtual Classroom, 1000 consistent with an embodiment of the invention. As shown, the Virtual Classroom 1000 preferably includes a plurality of student terminals 1010_1 to 1010_16, an instructor terminal 1012, a communications link 1014, a firewall 1018, a server and controller 1020, a pod controller 1024, and a pod 1026. The pod 1026 preferably includes a plurality of user devices 1040_1 to 1040_3. The number of devices needed will depend on the class objectives. The server and controller is optionally connected to a database 1022 that stores class specific information. The student terminals 1010_1 to 1010_16 each preferably include a browser (not shown) that may be a browser for Intemet/Intranet communications, such as a Netscape Navigator™ browser or a Microsoft Internet Explorer™ browser. Further, each student terminal 1010_1 to 1010_16 preferably includes a network application (not shown) for sending control information to the user devices. In one embodiment, the network application program is TELNET. The communications link can be any type of communications link, and may be, for example, a link across an Internet or Intra-net. Further, a server (not shown) may be used to connect the student and instructor terminals to an Internet or Intra-net that links the terminals to the server and controller 1020 and pod controller 1024.

Individual students need not be located at the same physical location. For example, one student may be located at one physical location, another student may be located in a physical location in a different city, a third student may be located in yet another city, and so on. The communications between the instructor and students can be supported using a variety of communications applications. For example, ILINC, Placeware, or Caliver communications applications may be used for supporting these communications. Further, the class can be conducted synchronously or asynchronously.

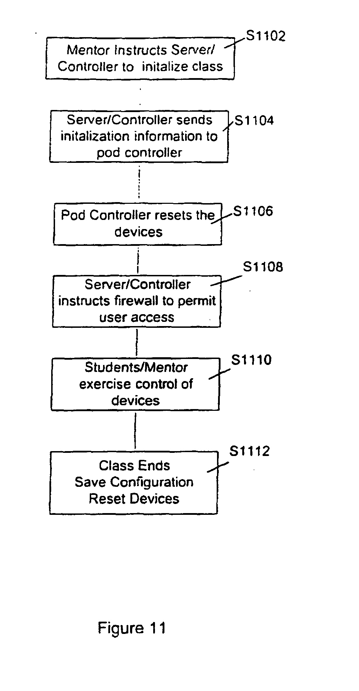

Figure 11 provides a flow diagram for the virtual classroom, consistent with the invention. An instructor initializes the class session by sending information from the instructor terminal 1012 to the server and controller 1020 (S1102). The server and controller 1020 then sends initialization information to the pod controller 1024 (S1104). The pod controller then resets the user devices 1040_1 to 1040_3 (S1106). The server and controller 1020 then instructs the firewall 1018 to permit the student terminals to access the pod controller 1024 (S1108). Through this system and mechanism students can be trained regarding controlling a user device by exercising actual control over the user devices in the pod (S1110).

After the class ends, the instructor can instruct the server and controller 1020 to save the configurations of the user devices 1040_1 to 1040_3 to allow the class to pick up where it left off at a later time. The user devices are then preferably reset to permit another class to use the user devices (S1112).

### Organization of Learning Structure

Traditionally, students are taught using a learning structure that involves an instructor first lecturing or telling students about a subject, such as how to operate a device. Next, the instructor shows the students how to perform the task, and finally students are provided with a task and asked to perform it.

In an embodiment of the invention, rather than first instructing the students regarding the operation of a device, students are invited to try and perform a task regarding the device. If the student is unable to perform the task they are provided with a first level of help. This first level of help includes clues or hints regarding performing the task and top-level information. If the student needs further help, he/she is provided with a second level of information. This second level of information includes detailed information regarding performance of the task, and in one embodiment includes showing the user the exact steps to take in order to perform the task.

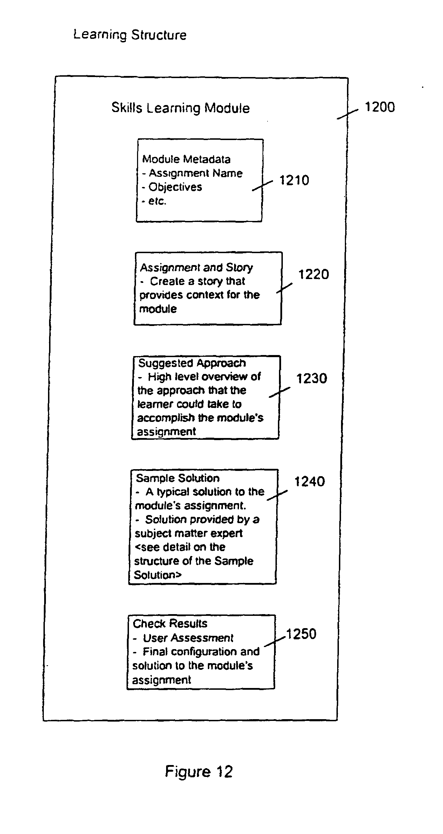

Figure 12 illustrates a logical diagram of a skills learning module 1200 consistent with the invention. The skills learning module 1200 may include module metadata 1210, an assignment and story module 1220, a suggested approach module 1230, a sample solution module 1240, and a check results module 1250. In an embodiment, the skills learning module is stored in database 22 along with each of its sub-modules. Each of these sub-modules may be presented to a user in the form of a web page in an html format, By structuring the data in a hierarchical manner, the user may view only that information which is needed at a particular time.

Module metadata 1210 is a set of data that describes the learning module, and may include information regarding the learning environment for the module, the author of the module, the difficulty level, target audience, and other like information. For example, module metadata 1210 may include the assignment's name, its difficulty, the expected time to complete it, its authorship. and the skills or knowledge that it exercises.

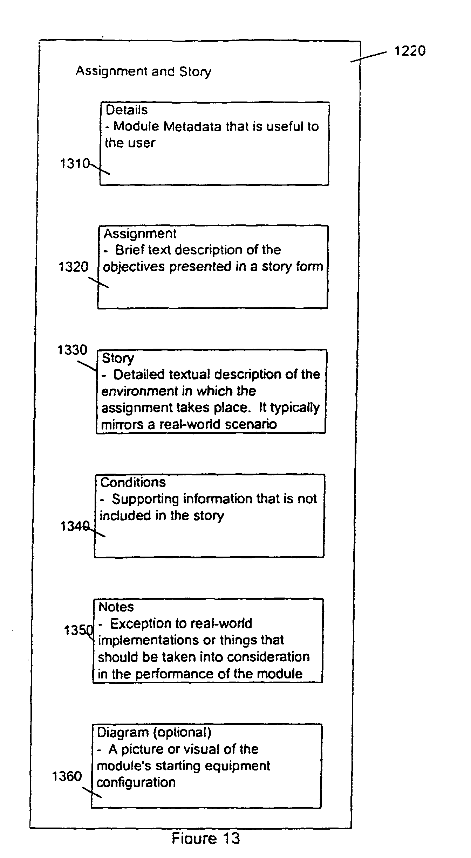

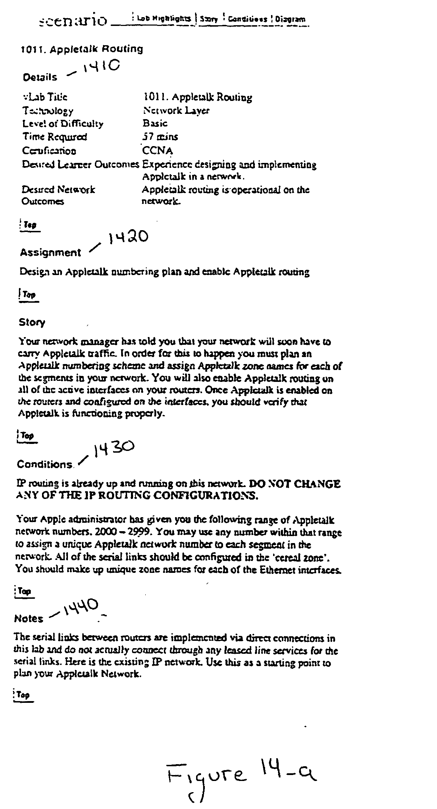

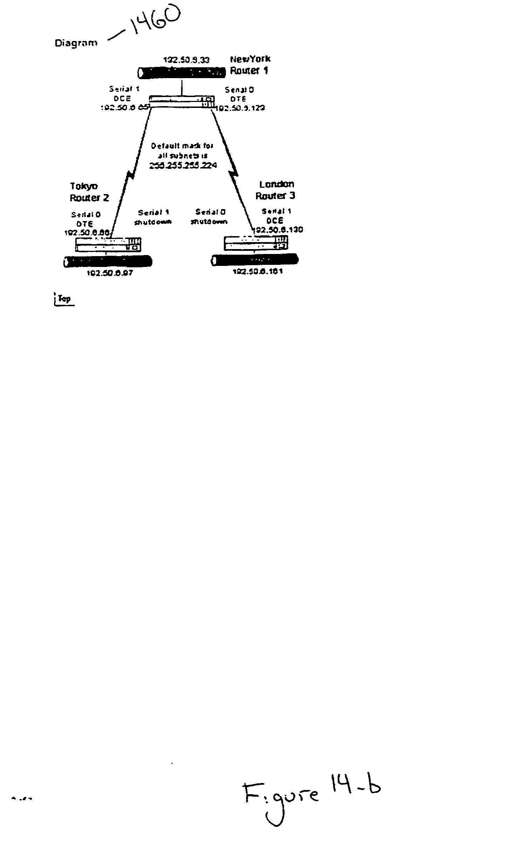

The assignment and story sub-module 1220 stores information regarding the context of an assignment so that a user may frame the learning experience in the real world. Figure 13 provides a more detailed logical description of information that may be stored by the assignment and story sub-module 1220. As illustrated the assignment and story sub-module 1220 may include a details sub-module 1310, an assignment sub-module 1320, a story sub-module 1330, a conditions sub-module 1340, a notes sub-module 1350, and a diagram sub-module 1360. Figure 14 illustrates an example of an assignment and story sub-module that may be presented to a user in the form of an html web page.

The details sub-module 1310 provides module metadata that is useful to the user. For example, as illustrated in Figure 14, the details sub-module 1410 may include data regarding the title of the assignment, the technology involved, the level of difficulty, the amount of time to complete the task, the certification it may be used for, the desired learner outcome, and the desired network outcomes.

The assignment sub-module 1320 provides a brief textual description of the environment in which the assignment takes place. For example, as illustrated in Figure 14, the assignment sub-module 1420 describes the assignment as designing an Appletalk numbering plan and enabling Appletalk routing.

The story sub-module 1330 provides a detailed textual description of the environment in which the assignment takes place. It typically mirrors a real-world scenario. For example, as illustrated in Figure 14, the story sub-module describes the story for the assignment as: "Your network manager has told you that your network will soon have to carry Appletalk traffic. In order for this to happen you must plan an Appletalk numbering scheme and assign Appletalk zone names for each of the segments in your network. You will also enable Appletalk routing on all of the active interfaces on your routers. Once Appletalk is enabled on the routers and configured on the interfaces, you should verify that Appletalk is functioning properly."

The conditions sub-module 1340 provides supporting information. For example, as illustrated in Figure 14, the conditions sub-module 1430 may include information such as:
"IP routing is already up and running on this network. DO NOT CHANGE ANY OF THE IP ROUTING CONFIGURATIONS.
Your Apple administrator has given you the following range of Appletalk network numbers, 2000-2999. You may use any number with that range to assign a unique Appletalk network number to each segment in the network. All of the serial links should be configured in the 'cereal zone'. You should make up unique zone names for each of the Ethernet interfaces."

The notes sub-module 1350 provides exceptions to real-world implementations or things that should be taken into consideration in the performance of the module. For example, as illustrated in Figure 14, the notes sub-module 1440 states that the exceptions to real world conditions for this assignment are that the serial links between routers are implemented via direct connections in this lab and do not actually connect through any leased line services for the serial links.

The diagram sub-module 1360 provides a picture or visual of the module's starting equipment. For example, as illustrated in Figure 14, the diagram sub-module 1460 illustrates three interconnected routers.

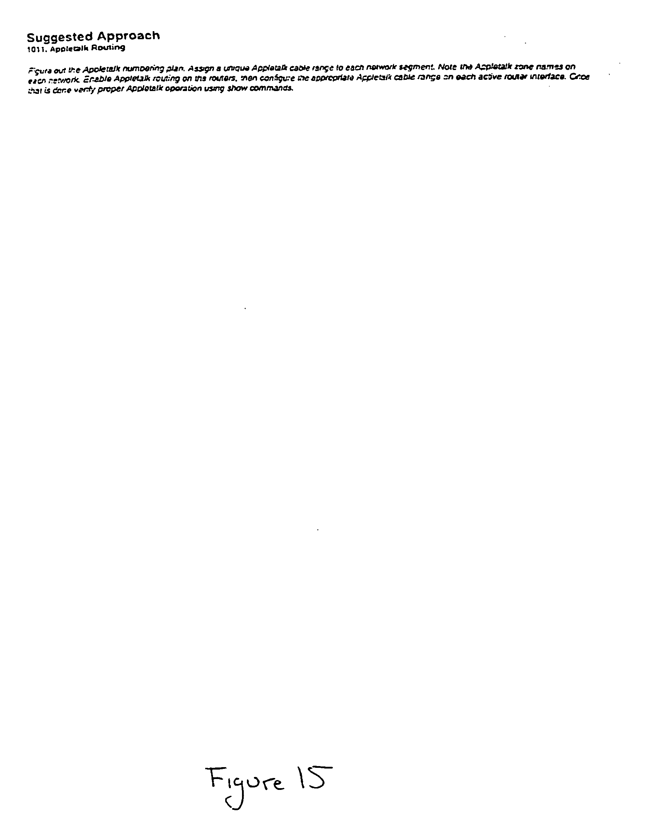

The suggested approach sub-module 1230 (Fig. 12) provides a high level description of an approach that the learner could take to accomplish the module's assignment. Figure 15 illustrates an example of a page that provides a user with a suggested approach. As illustrated, in this example, the suggested approach is for the user to: "Figure out the Appletalk numbering plan; assign a unique Appletalk cable range to each network segment; note the Appletalk zone names on each network; enable Appletalk routing on the routers; configure the appropriate Appletalk zone names on each active router interface; then verify proper Appletalk operation using show commands."

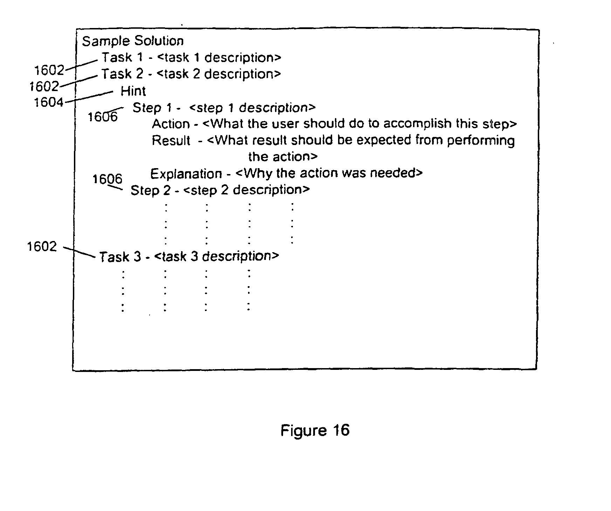

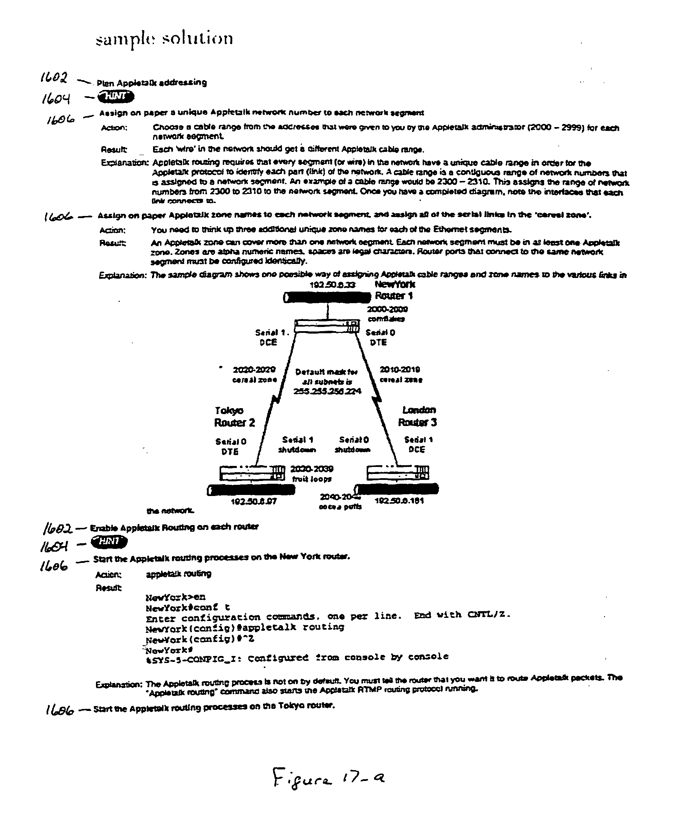

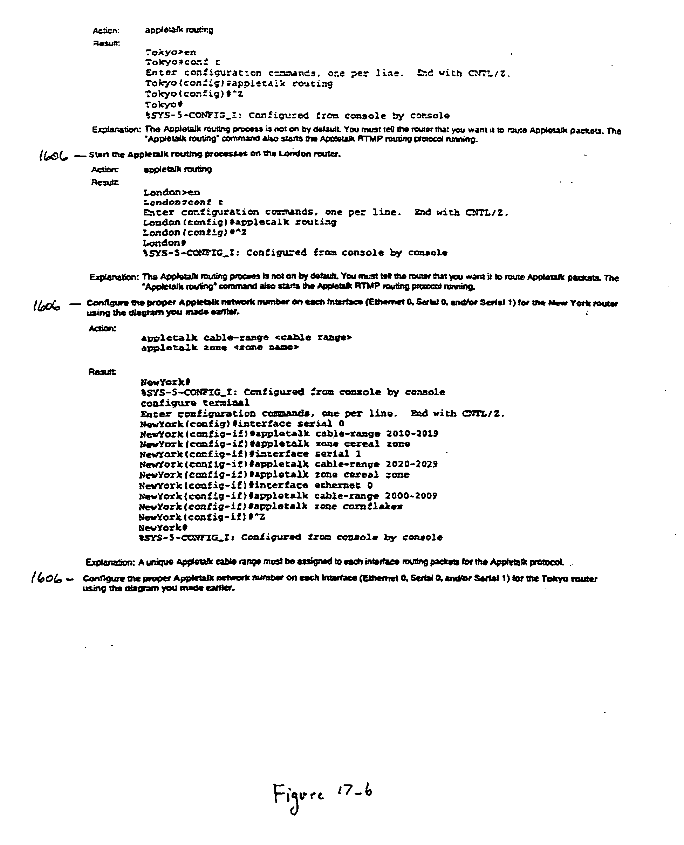

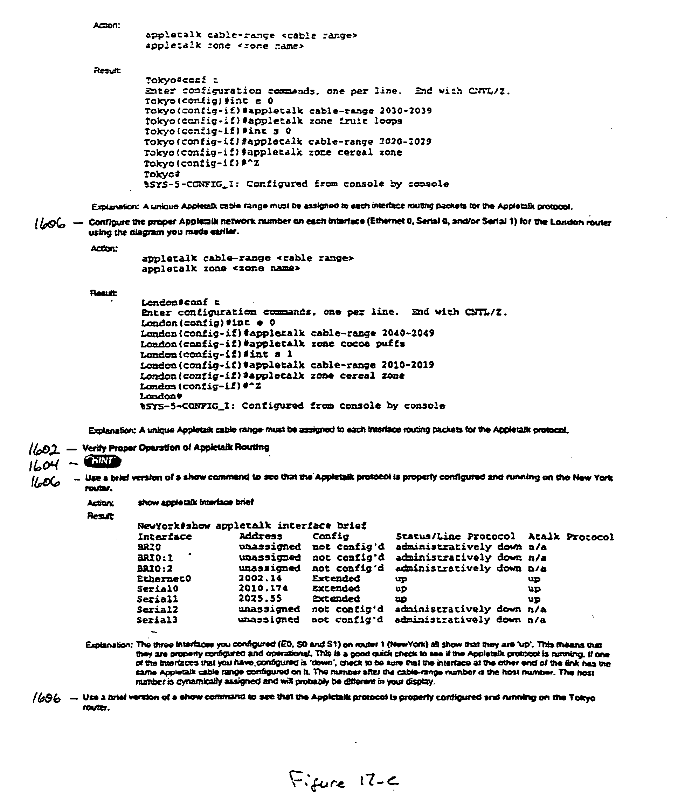

The sample solution sub-module 1240 (Fig. 12) contains a subject-matter expert's solution to the module's assignment. Figure 16 illustrates a template for a page that provides a user with a sample solution. Each solution can be broken down into a series of tasks 1602. The initial display may only show each task, along with a one-line description for the task. The user may then click on a task to expose more detailed information regarding the tasks, such as hints 1604 and steps 1606. A hint 1604 is designed to assist the user in accomplishing the tasks and is useful for users who need some initial direction on how to get started with the task, but do not need detailed information on the process. A step 1606 is a one line description that may include an action to take, the result of that action, and an explanation on why the step was necessary and the result that was achieved. In another embodiment, the sample solution may show all the details of the sample solution. Figure 17 illustrates an example of an html page that provides such a sample solution.

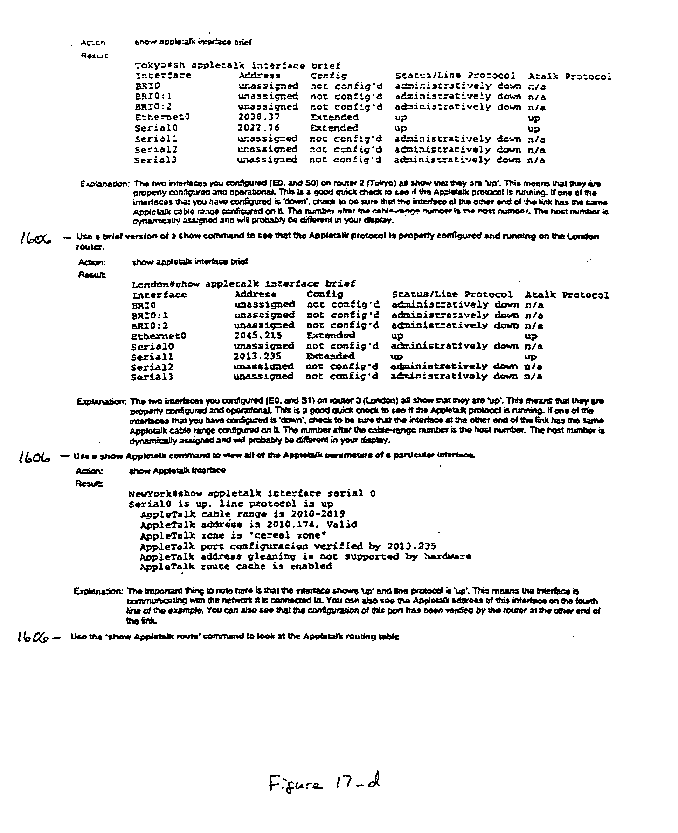

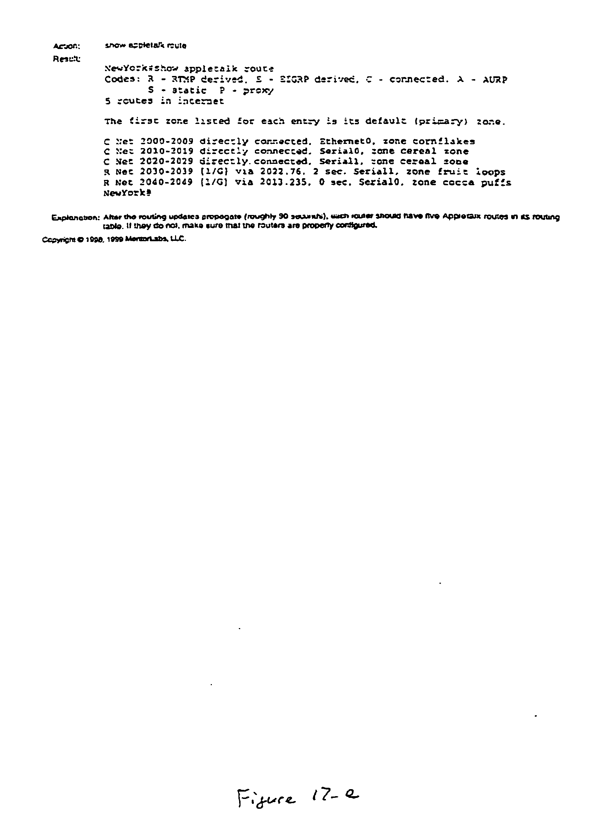

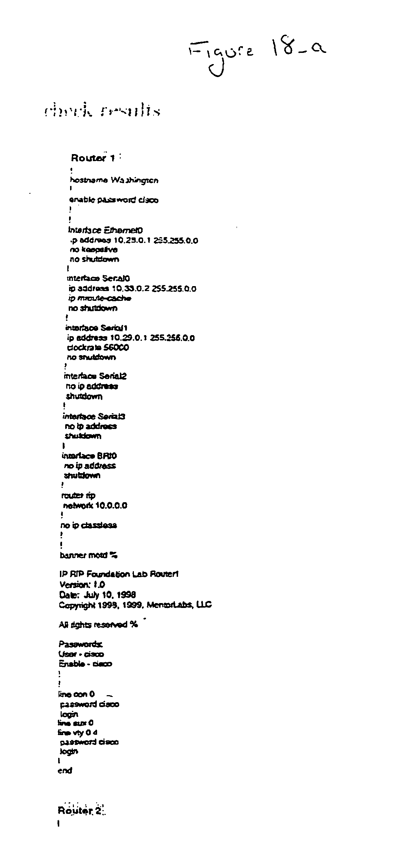

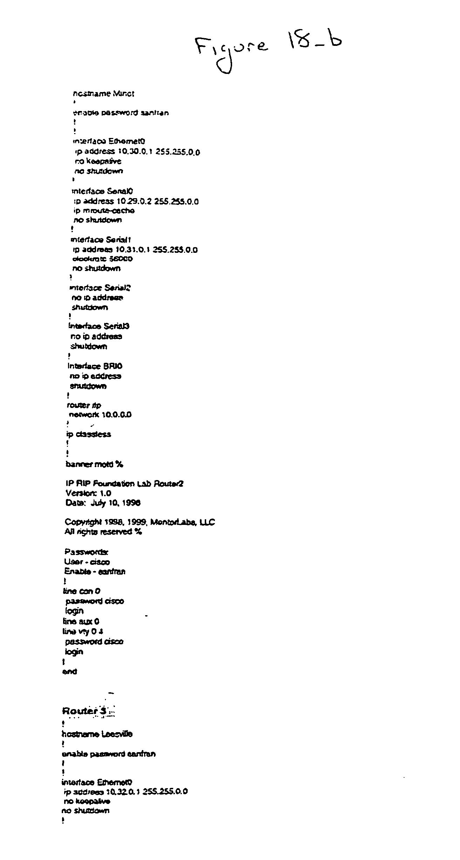

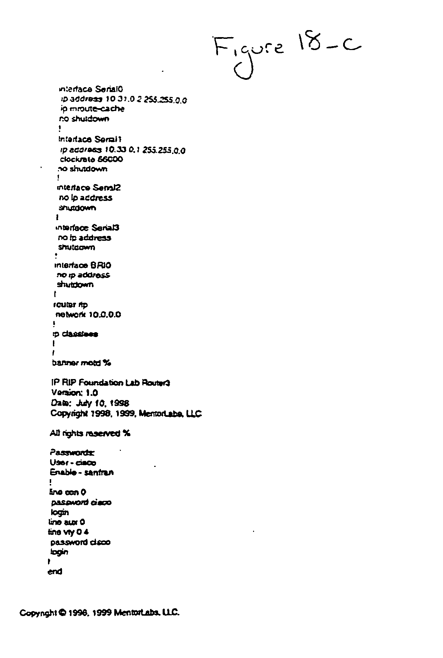

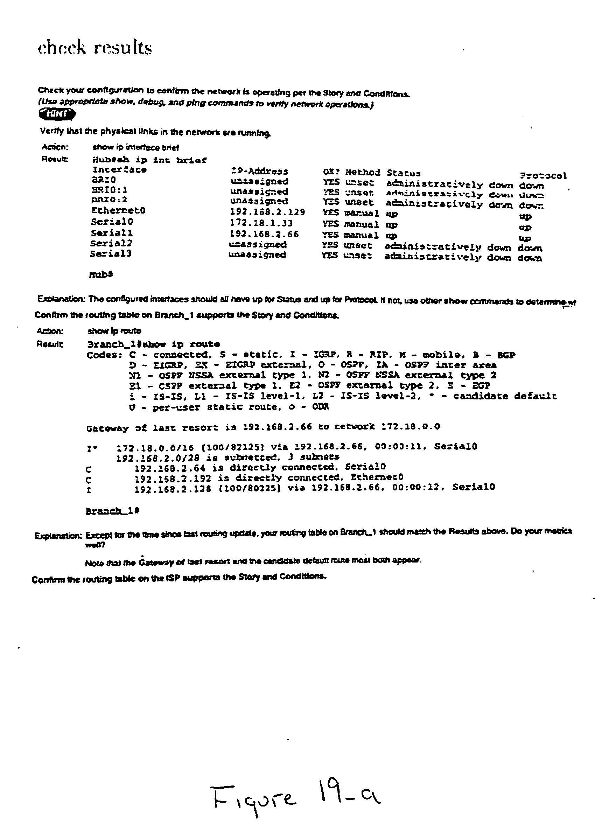

The check results sub-module 1250, provides user assessment because during the course of performing a lab or course, a user may wish to cheek his or her final results. The user's results may be assessed in a variety of ways. For example, this assessment may be performed by examining the final configuration of the devices as compared to a final configuration produced by a subject matter expert. Figure 18 illustrates an example of a page that provides a user with one possible set of final device configurations which can be used to compare against the results obtained by the user. In another embodiment, the check results module may provide a set of steps that the user can execute to assess his or her final configuration. For example, in a Cisco router lab, the user may be told how to examine the routing table of a specific device and look for specific outputs. Figure 19 illustrates an example of a page that provides a user with steps for checking their results.

Further, referring back to the example illustrated in Figure 4, the user may select from the graphical interface illustrated to view instructions regarding the lab 412. By clicking on this link, a page is displayed to the user regarding the general instructions for performing the lab. Also shown in the example illustrated in Figure 4 is a link to view plan 418. In this example, prior to beginning the lab, the user is presented with a series of predetermined questions designed to help the user structure his/her lab approach, thus allowing the user to plan his/her approach before beginning the lab. These questions may include, for example, questions regarding the user's plan of attack, the impact the user thinks his/her approach will have on the rest of the network and any potential trouble areas and anticipated challenges, and how he/she expects the lab to be helpful. Further, these questions may be predetermined questions or be adaptive questions that depend upon the user's answers to the questions. When the user later clicks on view plan 418, a web page is displayed to him/her that includes answers to these questions.

After a user completes a lab, in an embodiment, the user is led through a debrief question/answer section designed to reinforce the lessons taught by the lab and help the user identify ways that he/she might incorporate these skills in a production environment. The user's answers are then saved for future reference. These questions may include, for example, questions regarding how the user felt his/her plan worked out, the impact his/her approach might have had in a production environment, how he/she might change their approach, how he/she thinks his/her revised approach might work in a production environment, what he/she learned, and how the lab was helpful to him/her. Further, these questions may be predetermined questions or be adaptive questions that depend upon the user's answers to the questions.

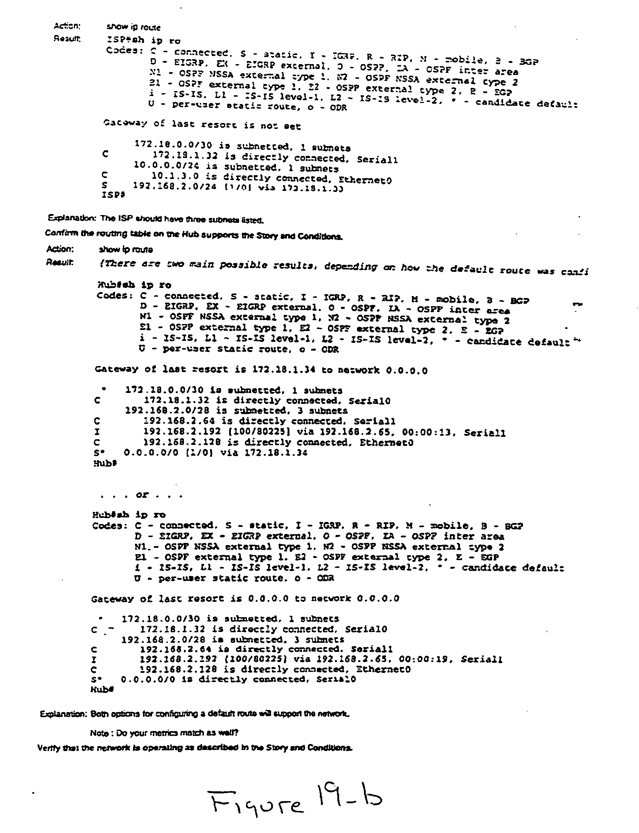

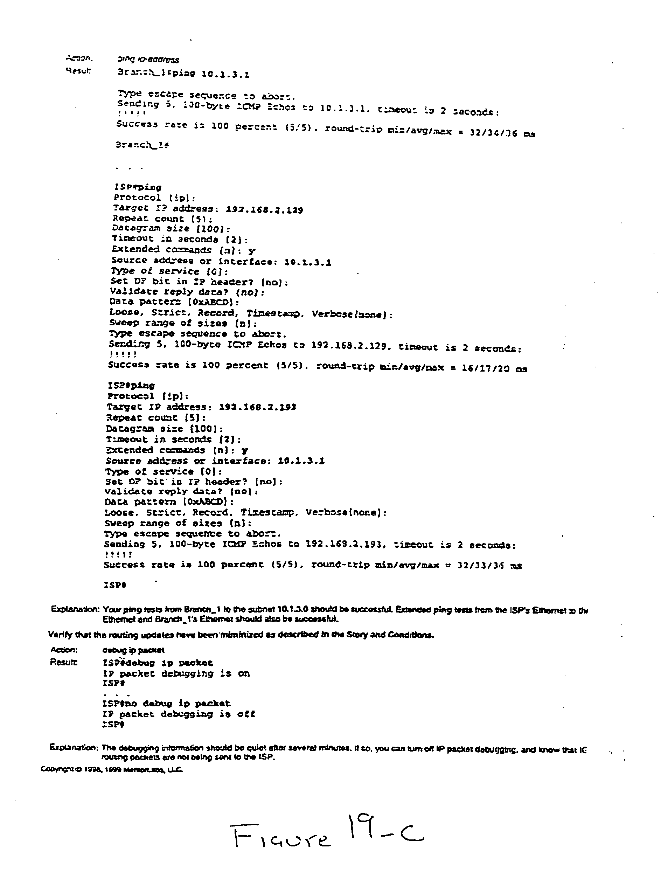

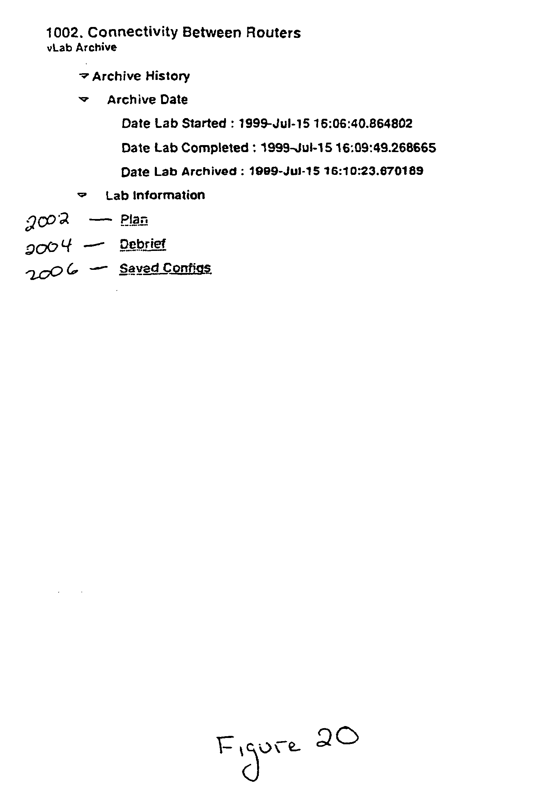

In one embodiment, after completion of a lab, the final configurations of the user devices along with other information are archived so that the user may retrieve the information and configurations at a later time. Figure 20 illustrates an example of a page that includes archived results after a user completes a lab where the user devices are Cisco type routers. In this figure, the data is organized such that a user may select the component of the data they wish to view while hiding the details of the other components. Thus, a user may quickly select the section of data they wish to view and ignore the other sections. For example, as illustrated, a user may select to individually view plan 2002, debrief 2004, or saved configurations 2006. By selecting plan 2002, a user may view, for example, information regarding their answers to the questions regarding their plan that they had previously entered. By selecting debrief 2004, a user may view information regarding their answers to questions during a debriefing session and by selecting saved configurations 2006, a user may view the final configurations of the user devices.

### Assessment

Using the above described Engine or Virtual Classroom permits assessing a user's proficiency regarding a device by assessing the user/student's control over the device.

Traditionally, students are assessed based on taking a test where they are asked questions regarding the device or control of the device. In an embodiment of the present invention, rather than simply asking a student questions regarding the device, the student is presented with a real world task regarding the control of the device. The student controls the device to perform the task. After completing the task, the student is assessed on his/her performance.

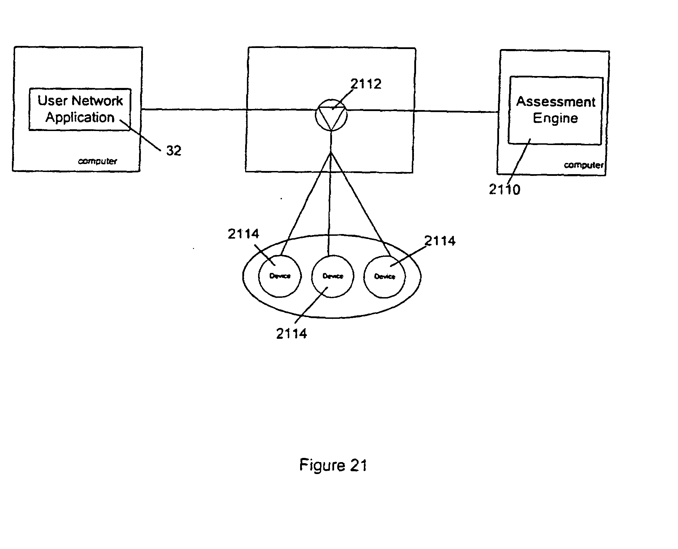

Figure 21 provides an illustration of an assessment engine 2110 that uses a wiretap 2112 to check the configuration of the user devices 2114 once the assignment is completed. As with the wiretap discussed above, various configurations may be used to implement the wiretap 2112. For example, KIBITZ may be used to implement the wiretap 2112. The assessment engine 2110 may be a piece of software running on a processor or computer. Once the assignment is completed, the assessment engine 2110 may examine the configuration of the various user devices 2114 using the wiretap 2112. The assessment engine then checks this configuration against an expected configuration. It then may generate a score. Further, the assessment engine can inform the user of how their configuration differs from the expected configuration, and the potential consequences of these differences.

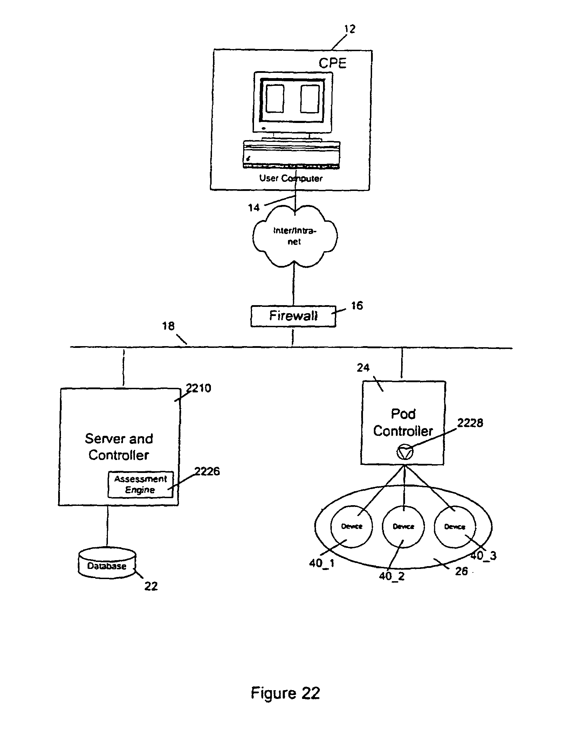

Figure 22 illustrates an embodiment in which the server and controller 2210 contains an assessment engine 2226. This assessment engine 2226 may be a piece of software running on a processor. At the completion of the assignment, the user's CPE 2212 may be disconnected from the user devices. The assessment engine 2226 then connects to the various user devices 40_1 to 40_3 through the wiretap 2228 of pod controller 24. The assessment engine 2226 then examines the configurations of the user devices 40_1 to 40_3 and compares these configurations with expected configurations. The assessment engine 2226 then may generate a score for the user, and provide him/her with feedback regarding the differences between his/her configurations and the expected configurations. Further, as will be obvious to one of skill in the art, in other embodiments, the assessment engine 2226 may connect to the various devices through a direct connection.

Further, as previously discussed in one embodiment a user may be presented with a set of steps that the user can execute to assess his or her final configuration. Referring back, Figure 19 illustrates an example of a page that provides a user with steps for checking their results.

### Resource Control Module

In yet another embodiment, the pod controller is implemented by a Resource Control Module (RCM). The RCM provides a scalable and configurable mechanism for the remote control of and remote access to computing resources. Access to the RCM may be via the public Internet or an Intranet.

As with the pod controller, the user's interface to these devices is exactly the same as it would be in the real-world case of direct access to the actual devices in a functioning production environment. The RCM further permits the user's environment to be fully isolated, so that nothing the user can do will have any impact outside that isolated environment. The RCM can preserve and restore the devices to predefined and/or user-created system configurations on command. When the user is finished with the equipment, the RCM can quickly return the devices to a known stable state for use by another user, facilitating the sharing of one set of assets among many users, in a timely manner, with no manual intervention.

The RCM preferably operates independently of the particular server and controller used. For example, the above-described virtual classroom may use a different type of server and controller than a virtual lab type system (i.e., a single user exercising control over a pod, such as was described in the above Engine section). Because the RCM may be both physically and logically separate, external applications may be insulated from the details of device control. This provides a flexible and scalable environment for integrating new devices and/or new application functionality.

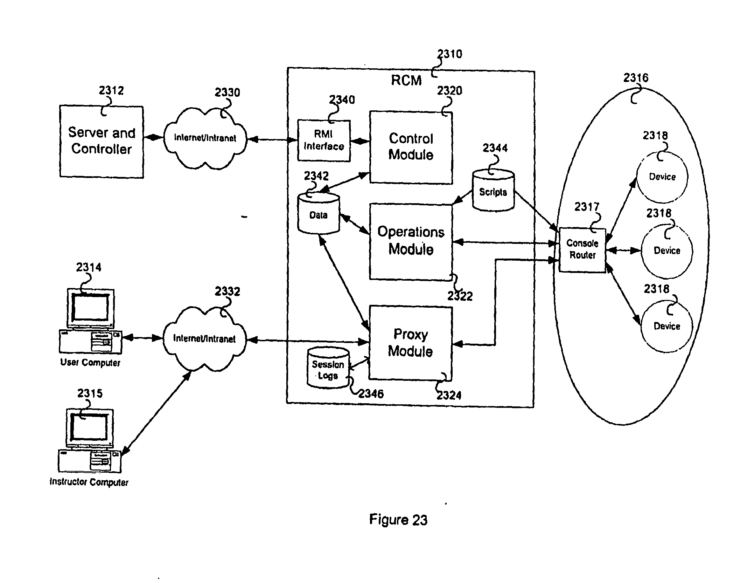

Figure 23 illustrates a simplified block diagram of the RCM 2310 connected to a server and controller 2312, a user computer 2314, an instructor computer 2315, and a pod 2316 that includes one or more remote devices 2318. The server and controller 2312 may connect to the RCM 2310 over an Internet or Intranet 2330 or via a direct connection and may be a server controller for a virtual lab system (i.e., a system in which a single user exercises control over the pod devices), a virtual classroom, or any other type of server controller. The user computer 2314 may connect to the Resource Control Module over an Internet or Intranet 2332 or via a direct connection. The devices 2318 may include any type of device, such as a router, a switch, a network server, personal computers (PCs), UNIX workstations (Sun™., etc.), or any other type of device. Further, as with the previous described embodiments the connections between the server and controller 2312, user computer 2314 and RCM 2310 may be though a firewall (not shown).

The RCM 2310 preferably uses a component based architecture which includes a control module 2320, an operations module 2322, and a proxy module 2324 that perform separate independent functions. These software modules may be collocated on the same computing device (processor) or remotely located on separate computing devices. In addition, the RCM 2310 may include a RMI interface 2340, a database for storing overhead and status information 2342, a database for storing script names that are used in controlling devices 2344, and a file or database for storing session logs 2346. Further, as will be obvious to one of skill in the art, all these databases may be combined in a single database.

In addition to including one or more devices 2318, the pod 2316 may also include a console router 2317, and infrastructure devices such as a power controller (not shown) for resetting power to the devices, and/or a relay control box for pressing any physical button on the device. The console router 2317 may be used for communicating with serial ports on a networking device and or for assigning a private or public IP address to a devices serial port. Further, the RCM 2310, like a pod controller, may also include device communications. control, and multiplexor modules (not shown) and interface to device modules (not shown).

The control module 2320 preferably accepts commands from an external application such as virtual lab or virtual classroom and communicates the commands to the appropriate module. This module allows for scalability in allowing new modules to be added to the system without modifying the current modules. The control module 2320 further provides a mechanism to physically and logically separate the RCM 2310 from the application environment.

The control module 2320 accomplishes this by employing a common set of instructions that different types of server and controller's 2312 can use to communicate with the control module 2320. These instructions are preferably in the form of a remote procedure call (RPC) language, such as Java™ RMI. In an embodiment, the following general message types are used by the RCM's control module 2320:
addUser - Adds access for a user to a device
deleteUser - Removes user access from a device
changePerm - Changes user permission on a device
pause - Pauses telnet connection
resume - Resumes a paused telnet connection
startLog - Starts logging for a device
stopLog - Stops logging for a device
getLog - Retrieves a log file
getUserList - Retrieves all current users and their permissions
runOperation - performs an operation on the device such as SCRUB,
SAVE, LOAD, or CycleBreak. SCRUB returns the device to its original factory settings; SAVE saves the current state of the device;
and LOAD returns the device to a previously saved state.

The control module 2320 preferably accepts requests via an RPC call, such as a JAVA™ RMI call, from the server and controller 2312. Each call relates to a function within the control module 2320. Depending on the operation type, the control module either updates a database, such as database 2342, or simply passes the information to another module within the RCM 2310, such as the operations module 2322 or proxy module 2324. For script commands, the operations module 2322 spawns a script that may be stored in database 2344. The script then is used to perform a particular operation on the device 2318. The output of the script (pass or fail) is then passed back to the server and controller 2312 via the original RMI call. A more detailed description of a script is presented below.

The operations module 2322 preferably performs actual device control. This module is designed such that new devices can be added without major modification to the existing software. This is accomplished by encapsulating the device specific details in device specific scripts. The scripts may be written in a script language, such as Expect or Perl™ and are used to communicate with the device in a send this and expect that manner. Thus, by using a script, an entire procedure for a device can be scripted using basic device commands. The operations module 2322 by looking in database 2344 can tell from a particular instruction it receives, which script to call for each device, Thus, the operations module 2322 upon receiving a generic instruction to perform an operation on a device 2318 can use the particular script for the device 2318 to send the device specific instructions to the device 2318. In other words, the operations module 2322 may command the execution of the appropriate script based on generic information that is received from the control module 2320. In addition to device control, the operations module 2322 maintains the status of all pods and the devices within each pod.

The proxy module 2324 couples the user to the actual remote devices 2318. The proxy module 2324 preferably provides authentication of the remote user prior to granting access to the remote device. Once granted, access is further controlled based on the application assigned user level (typically Instructor or Student). The proxy module 2324 may also allow pause and restart of a connection, session logs for assessment, and multiple connections to the remote devices 2318 (simultaneous access by student and instructor). As such, the proxy module may allow for the emulation of Instructor Led Training (ILT) training by allowing both an instructor and user to share the same Telnet session. This allows the instructor to "show" the user in realtime how to do something on the device, or the instructor and other users can "watch" the user do something to the device. Also, multiple permissions may be set for multiple users. That is, some users may be permitted to both send and receive information to/from the device, while other users may just be permitted to receive information from the device. The proxy module 2324 further may permit pausing of the user's session in order to allow the operations module 2322 to perform operations on the device (e.g. scrub, load, or save). Thus, the user will not need to reconnect to the device every time such operations are performed.

Further, the proxy module may log information reflecting all or certain parts of a user's session. That is, storing the information that is sent to or from a device 2318. This session log can then be retrieved by the user at a later time. Also, the proxy module also preferably provides the capability to intercept and redirect or prevent potentially damaging user commands from reaching the remote devices 2318. For example, for routers the "write flash erase" can be potentially damaging to the router and as such, the proxy module can discard this command in order to prevent it from harming the device,

These software modules preferably communicate using an RPC, such as Java™ RMI. RMI is used to receive messages from external systems such as the server and controller 2312 as well as being used for module to module communication. Further, as will be obvious to one of skill in the art, any other type of remote command method may be used in place of RMI. For example, CORBA may be used.

As discussed above, the RCM 2310 may use a database 2342 for storing overhead and status information, such as Sybase's Adaptive Server Anywhere™ (ASA) database. In a particular embodiment, this database 2342 contains the following tables:
Device_Type - a table that contains identification (ids) that identify device types (e.g. 1900,2500, Wintel PC)
Pod_Type - a table that contains ids that identify pod types.
Pod - a table that identifies the pods connected to this RCM.
Device - a table that contains detailed information about a specific device.
Device_User- a table that contains access and status information about a user.
Support_Device_Type - table that contains ids that identify support device types (e.g. a power controller, a console router, or a disk image server)
Support_Device - a table that contains detailed information about a specific support device

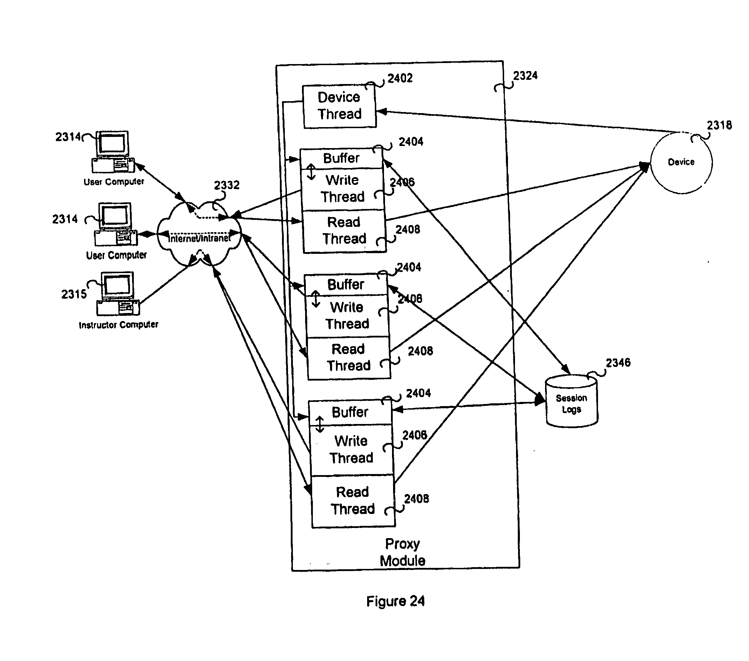

Figure 24 illustrates a logical block diagram of the proxy module 2324 of RCM 2310, in accordance with methods and systems consistent with the invention. As illustrated, the proxy module 2324 is connected to two user computers 2314 and an instructor computer 2315 over an Internet or Intranet 2332. As will be obvious to one of skill in the art, this connection may also be a direct connection, or some other type of connection. The proxy module is further connected to a database for storing session logs. Also connected to the proxy module 2324 is a device 2318. Preferably, the proxy module 2324 contains a device thread 2402. Further, the proxy module preferably includes a buffer 2404, a write thread 2406, and a read thread 2408 for each user or instructor.

Although Figure 24 illustrates that the proxy module is connected to a single device 2318, in other embodiments it may be connected to multiple devices. In such embodiments, there is a separate device thread 2402 for each device 2318. Further, each user or instructor has a separate buffer 2404, write thread 2406, and read thread 2408 for each device connected to the proxy module 2324.

When a user wishes to communicate with the device 2318, it sends instructions to the respective read thread 2408 in the proxy module. The user may send this information using a particular application that depends on the specifics of the device 2318. For example, this information can be sent to the read thread by a user using Telnet, a web browser, or any other network application that the device 2318 requires for communications. The read thread then examines the instructions and depending on the users permissions either forwards the instruction to the device 2318 or discards it, Thus, potentially damaging user commands can be prevented from reaching the 2318. Further, different permissions may be set for different users and/or instructors. For example, it may be desirable that a certain user or instructor not be allowed to send instructions to the device 2318. Thus, the read thread 2408 for such a user can discard all instructions it receives from that user for the device 2318.

The device 2318 then receives the command. This command will be echoed back to the device thread 2402 of the proxy module 2314. Further, all other device output is sent from the device 2318 to the device thread 2402 for the device.

These commands are then sent to the buffers 2404 for each user/instructor in communication with the device 2318. Depending on the permissions for the user computer 2314 or instructor computer 2315, the buffer may either send this information to a database 2346 that stores session logs, discard the information, or pass the information to the write thread 2406, which forward the information to its respective user computer 2314 or instructor computer 2315.

Thus, permissions may be set for each user computer 2314 and instructor computer 2315 that communicates with a particular device 2318, such that one user computer 2314 may be able to send and receive instructions and information to/from a device 2318, while other user computers 2314 are not permitted to send or receive information and/or instructions to/from the device 2318. This further permits an instructor terminal 2315 to watch how a particular user is exercising control over the device 2318, and then show a user(s) how they should control the device 2318.

While it has been illustrated and described what is at present considered to be the preferred embodiment and methods of the present invention, it will be understood by those skilled in the art that various changes and modifications may be made, and equivalents may be substituted for elements thereof within the scope of the invention as defined by the claims.

## Claims

1. A method for training users to operate a set of devices (26,1026,2316), wherein at least one client computer (28,1010,2314) is connected to a device controller (24,1024,2314) via a network (14,16,1014,1018, 2332) and wherein a particular user uses the client computer (28,1010,2314) to communicate with the device controller (24,1024,2314) via the network (14,16,1014,1018,2332) to perform a training exercise using the set (26,1026,2316) of one or more devices (40,1040,2318), the method comprising the steps of:
receiving control information at a proxy (2324) in the device controller (24,1024,2314) reflecting at least one instruction from the client computer (28,1010,2314) regarding a task to be performed as part of the training exercise;
performing an operation associated with at least one of the devices (40,1040,2318) of the set of devices (26,1026,2316); and
providing a result of the operation to the client computer (28,1010,2314).

2. A system for training users to operate a set (26,1026,2316) of one or more devices (40,1040,2318), comprising:
a device controller (24,1024,2314) connected to at least one client computer (28,1010,2314) via a network (14,16,1014,1018,2332), wherein the device controller (24,1024,2314) includes a proxy (2324) that receives control information from the client computer (28,1010,2314) reflecting at least one task to be performed as part of a training exercise and transfers the control information to any device (40,1040,2318) as part of the training exercise; and
a set of devices (26,1026,2316) that receives the control information transferred from the proxy (2324) in the device controller (24,1024,2314), performs an operation associated with the control information, and provides a result of the operation to the client computer (28,1010,2314) via the device controller (24,1024,2314).

3. A method for training users to operate a set of devices (26,1026,2316), wherein at least one client computer (28,1010,2314) is connected to a device controller (24,1024,2314) via a network (14,16,1014,1018, 2332) and wherein a particular user uses the client computer (28,1010,2314) to communicate with the device controller (24,1024,2314) via the network (14,16,1014,1018, 2332) to perform a training exercise using the set of devices (26,1026,2316), the method comprising the steps of:
a server controller (20,1020,2210,2312) transferring overhead information using a generic set of commands to the device controller (24,1024,2314) in order to perform overhead functions relating to the set of devices (26,1026,2316);
the device controller (24,1024,2314) using the overhead information to exercise control over at least one of the devices (40,1040,2318) in the set of devices (26,1026,2316) for the purposes of performing overhead functions relating to the device (40,1040,2318);
receiving control information at the device controller (24,1024,2314) reflecting at least one instruction from the client computer (28,1010,2314) regarding a task to be performed as part of the training exercise;
performing an operation associated with at least one of the devices (40,1040,2318) of the set of devices (26,1026,2316); and
providing a result of the operation to the client computer (28,1010,2314).

4. A system for training users to operate devices, comprising:
a set of devices (26,1026,2316);
a server/controller (20,1020,2210,2312) including a processor that transfers overhead information for overhead functions relating to the set of devices (26,1026,2316) using a generic set of commands;
a device controller (24,1024,2314) connected to at least one client computer (28,1010,2314) via a network (14,16,1014,1018,2332) and connected to the server/controller (20,1020,2210,2312), wherein the device controller (24,1024,2314) includes a processor configured to receive the overhead information from the server/controller (20,1020,2210,2312), exercise control over the set of devices (26,1026,2316) using the overhead information, receive from the client computer (28,1010,2314) control information reflecting at least one task associated with a training exercise, and transfer the control information to the set devices (26,1026,2316) in order to perform an operation associated with at least one device (40,1040,2318) of the set (26,1026,2316).

## Patentansprüche

1. Verfahren zum Schulen von Benutzern in der Bedienung eines Satzes von Geräten (26, 1026, 2316), wobei wenigstens ein Client-Computer (28, 1010, 2314) mit einem Gerätecontroller (24, 1024, 2314) über ein Netzwerk (14, 16, 1014, 1018, 2332) verbunden ist und wobei ein bestimmter Benutzer den Client-Computer (28, 1010, 2314) für die Kommunikation mit dem Gerätecontroller (24,1024,2314) über das Netzwerk (14,16,1014,1018,2332) zur Durchführung einer Schulungsübung mit dem Satz (26, 1026, 2316) von einem oder mehreren Geräten (40, 1040, 2318) benutzt, wobei das Verfahren die folgenden Schritte umfasst:
Empfangen von Steuerinformationen an einem Proxy (2324) in dem Gerätecontroller (24, 1024, 2314), die wenigstens eine Anweisung von dem Client-Computer (28, 1010, 2314) über eine im Rahmen der Schulungsübung durchzuführende Aufgabe reflektiert;
Durchführen eines Vorgangs in Verbindung mit wenigstens einem der Geräte (40, 1040, 2318) des Satzes von Geräten (26, 1026, 2316); und
Senden eines Ergebnisses des Vorgangs zum Client-Computer (28, 1010, 2314).

2. System zum Schulen von Benutzern zum Betreiben eines Satzes (26, 1026, 2316) von einem oder mehreren Geräten (40, 1040, 2318), das Folgendes umfasst:
einen Geräte-Controller (24, 1024, 2314), der mit wenigstens einem Client-Computer (28, 1010, 2314) über ein Netzwerk (14, 16, 1014, 1018, 2332) verbunden ist, wobei der Geräte-Controller (24, 1024, 2314) ein Proxy (2324) beinhaltet, das Steuerinformationen vom Client-Computer (28, 1010, 2314) empfängt, die wenigstens eine im Rahmen einer Schulungsübung durchzuführende Aufgabe reflektiert, und die Steuerinformationen zu einem beliebigen Gerät (40, 1040, 2318) im Rahmen der Schulungsübung überträgt; und
einen Satz von Geräten (26, 1026, 2316), die die von dem Proxy (2324) in dem Geräte-Controller (24, 1024, 2314) übertragenen Steuerinformationen empfängt, einen Vorgang in Verbindung mit den Steuerinformationen ausführt und ein Ergebnis des Vorgangs zum Client-Computer (28, 1010, 2314) über den Geräte-Controller (24, 1024, 2314) sendet.

3. Verfahren zum Schulen von Benutzern in der Bedienung eines Satzes von Geräten (26, 1026, 2316), wobei wenigstens ein Client-Computer (28, 1010, 2314) mit einem Geräte-Controller (24, 1024, 2314) über ein Netzwerk (14, 16, 1014, 1018, 2332) verbunden ist und wobei ein bestimmter Benutzer den Client-Computer (28, 1010, 2314) für die Kommunikation mit dem Geräte-Controller (24, 1024, 23 14) über das Netzwerk (14, 16, 1014, 1018, 2332) zur Ausführung einer Schulungsübung unter Verwendung des Satzes von Geräten (26, 1026, 2316) benutzt, wobei das Verfahren die folgenden Schritte umfasst:
Übertragen von Overhead-Informationen durch einen Server-Controller (20, 1020, 2210, 2312) mit Hilfe eines generischen Satzes von Befehlen zum Geräte-Controller (24, 1024, 2314), um Overhead-Funktionen in Bezug auf den Satz von Geräten (26, 1026, 2316) auszuführen;
Benutzen der Overhead-Informationen durch den Geräte-Controller (24, 1024, 2314) zum Ausüben von Kontrolle über wenigstens eines der Geräte (40, 1040, 2318) in dem Satz von Geräten (26, 1026, 2316) für die Zwecke des Ausführens von Overhead-Funktionen in Bezug auf das Gerät (40, 1040, 2318);
Empfangen von Steuerinformationen am Geräte-Controller (24, 1024, 2314), die wenigstens eine Anweisung vom Client-Computer (28, 1010, 2314) über eine im Rahmen der Schulungsübung durchzuführende Ausgabe reflektiert;
Durchführen eines Vorgangs in Verbindung mit wenigstens einem der Geräte (40, 1040, 2318) aus dem Satz von Geräten (26, 1026, 2316); und
Senden eines Ergebnisses des Vorgangs zu dem Client-Computer (28, 1010, 2314).

4. System zum Schulen von Benutzern in der Bedienung von Geräten, das Folgendes umfasst:
einen Satz von Geräten (26, 1026, 2316);
einen Server/Controller (20, 1020, 2210, 2312) mit einem Prozessor, der Overhead-Informationen für Overhead-Funktionen in Bezug auf den Satz von Geräten (26, 1026, 2316) mit Hilfe eines generischen Satzes von Befehlen überträgt;
einen Geräte-Controller (24, 1024, 2314), der mit wenigstens einem Client-Computer (28, 1010, 2314) über ein Netzwerk (14, 16, 1014, 1018, 2332) verbunden ist und mit dem Server/Controller (20, 1020, 2210, 2312) verbunden ist, wobei der Geräte-Controller (24, 1024, 2314) einen Prozessor beinhaltet, der so konfiguriert ist, dass er die Overhead-Informationen von dem Server/Controller (20, 1020, 2210, 2312) empfängt, die Kontrolle über den Satz von Geräten (26, 1026, 2316) anhand der Overhead-Informationen ausübt, vom Client-Computer (28, 1010, 2314) Steuerinformationen empfängt, die wenigstens eine Aufgabe in Verbindung mit einer Schulungsübung reflektieren, und die Steuerinformationen zu dem Satz von Geräten (26, 1026, 2316) überträgt, um einen Vorgang in Verbindung mit wenigstens einem Gerät (40, 1040, 2318) des Satzes (26, 1026, 2316) auszuführen.

## Revendications

1. Procédé destiné à former des utilisateurs à faire fonctionner un ensemble de dispositifs (26, 1026, 2316), dans lequel au moins un ordinateur client (28, 1010, 2314) est connecté à un contrôleur de dispositifs (24, 1024, 2314) par le biais d'un réseau (14, 16, 1014, 1018, 2332) et dans lequel un utilisateur spécifique utilise l'ordinateur client (28, 1010, 2314) pour communiquer avec le contrôleur de dispositifs (24, 1024, 2314) par le biais du réseau (14, 16, 1014, 1018, 2332) afin de réaliser un exercice de formation en utilisant l'ensemble (26, 1026, 2316) d'un ou plusieurs dispositifs (40, 1040, 2318), le procédé comportant les étapes suivantes :
la réception d'informations de contrôle au niveau d'un mandataire (2324) dans le contrôleur de dispositifs (24, 1024, 2314) reflétant au moins une instruction en provenance de l'ordinateur client (28, 1010, 2314) concernant une tâche devant être réalisée dans le cadre de l'exercice de formation ;
la réalisation d'une opération associée à au moins un des dispositifs (40, 1040, 2318) de l'ensemble de dispositifs (26, 1026, 2316) ; et
la transmission d'un résultat de l'opération à l'ordinateur client (28, 1010, 2314).

2. Système destiné à former des utilisateurs à faire fonctionner un ensemble (26, 1026, 2316) d'un ou plusieurs dispositifs (40, 1040, 2318), comportant :
un contrôleur de dispositifs (24, 1024, 2314) connecté à au moins un ordinateur client (28, 1010, 2314) par le biais d'un réseau (14, 16, 1014, 1018, 2332), dans lequel le contrôleur de dispositifs (24, 1024, 2314) comprend un mandataire (2324) qui reçoit des informations de contrôle en provenance de l'ordinateur client (28, 1010, 2314) reflétant au moins une tâche devant être réalisée dans le cadre d'un exercice de formation et qui transfère les informations de contrôle à n'importe quel dispositif (40, 1040, 2318) dans le cadre de l'exercice de formation ; et
un ensemble de dispositifs (26, 1026, 2316) qui reçoit les informations de contrôle transférées en provenance du mandataire (2324) dans le contrôleur de dispositifs (24, 1024, 2314), qui réalise une opération associée aux informations de contrôle et qui transmet un résultat de l'opération à l'ordinateur client (28, 1010, 2314) par le biais du contrôleur de dispositifs (24, 1024, 2314).

3. Procédé destiné à former des utilisateurs à faire fonctionner un ensemble de dispositifs (26, 1026, 2316), dans lequel au moins un ordinateur client (28, 1010, 2314) est connecté à un contrôleur de dispositifs (24, 1024, 2314) par le biais d'un réseau (14, 16, 1014, 1018, 2332) et dans lequel un utilisateur spécifique utilise l'ordinateur client (28, 1010, 2314) pour communiquer avec le contrôleur de dispositifs (24, 1024, 2314) par le biais du réseau (14, 16, 1014, 1018, 2332) afin de réaliser un exercice de formation en utilisant l'ensemble de dispositifs (26, 1026, 2316), le procédé comportant les étapes suivantes :
le transfert par un contrôleur serveur (20, 1020, 2210, 2312) des informations de service en utilisant un ensemble générique de commandes à destination du contrôleur de dispositifs (24, 1024, 2314) afin de réaliser des fonctions de service relatives à l'ensemble de dispositifs (26, 1026, 2316) ;
l'utilisation par le contrôleur de dispositifs (24, 1024, 2314) des informations de service pour exercer un contrôle sur au moins un des dispositifs (40, 1040, 2318) de l'ensemble de dispositifs (26, 1026, 2316) dans le but de réaliser des fonctions de service relatives au dispositif (40, 1040, 2318) ;
la réception d'informations de contrôle au niveau du contrôleur de dispositifs (24, 1024, 2314) reflétant au moins une instruction en provenance de l'ordinateur client (28, 1010, 2314) concernant une tâche devant être réalisée dans le cadre de l'exercice de formation ;
la réalisation d'une opération associée à au moins un des dispositifs (40, 1040, 2318) de l'ensemble de dispositifs (26, 1026, 2316) ; et
la transmission d'un résultat de l'opération à l'ordinateur client (28, 1010, 2314).

4. Système destiné à former des utilisateurs à faire fonctionner des dispositifs, comportant :
un ensemble de dispositifs (26, 1026, 2316);
un serveur / contrôleur (20, 1020, 2210, 2312) comprenant un processeur qui transfère des informations de service pour des fonctions de service relatives à l'ensemble de dispositifs (26, 1026, 2316) en utilisant un jeu générique de commandes ;
un contrôleur de dispositifs (24, 1024, 2314) connecté à au moins un ordinateur client (28, 1010, 2314) par le biais d'un réseau (14, 16, 1014, 1018, 2332) et connecté au serveur / contrôleur (20, 1020, 2210, 2312), dans lequel le contrôleur de dispositifs (24, 1024, 2314) comprend un processeur configuré pour recevoir les informations de service en provenance du serveur / contrôleur (20, 1020, 2210, 2312), pour exercer un contrôle sur l'ensemble de dispositifs (26, 1026, 2316) en utilisant les informations de service, pour recevoir en provenance de l'ordinateur client (28, 1010, 2314) des informations de contrôle reflétant au moins une tâche associée à un exercice de formation, et pour transférer les informations de contrôle à l'ensemble de dispositifs (26, 1026, 2316) afin de réaliser une opération associée à au moins un dispositif (40, 1040, 2318) de l'ensemble (26, 1026, 2316).
